# EUROPEAN PATENT SPECIFICATION

(11) **EP 2 703 236 B1**
(45) Date of publication and mention of the grant of the patent: **18.05.2016**
(21) Application number: 13179045.3
(22) Date of filing: 02.08.2013
(51) Int. Cl.: B60R 25/00, B60R 25/20

(54) **An apparatus and method for restricting vehicle function**
Vorrichtung und Verfahren zur Einschränkung einer Fahrzeugfunktion
Appareil et procédé pour limiter la fonction de véhicule

(30) Priority: 28.08.2012 IN CH35522012
(43) Date of publication of application: 05.03.2014
(73) Proprietor: ROBERT BOSCH GMBH, 70442 Stuttgart (DE)
(72) Inventor: Shanbhag, Raghavendra, 560041 Karnataka, Bangalore (IN); Jain, Sumit, 560017 Karnataka, Bangalore (IN)

(56) References cited:
- GB-A- 2 275 124
- US-A1- 2009 064 740

## Description

### Field of the invention

The present invention relates to an in-vehicle apparatus and method to create a restricted mode. In such restricted mode certain vehicle functions could be restricted which is useful when the vehicle is given to a third party, for example during valet parking.

### Background of the invention

Valet parking is a service provided by establishments such as casinos, hotels, restaurants, stadiums, airport and other gathering places to drivers/owners of vehicles. Valet parking is typically comprised of the valet attendant giving the driver/owner a valet ticket in exchange for possession of the vehicle. The valet attendant then parks the vehicle. Upon return, the driver/owner gives the ticket to the valet attendant. The valet attendant retrieves the vehicle based on the ticket. The valet attendant or a third party could misuse vehicles in his possession by taking it for a ride, could tamper the vehicle parts, could also steal the vehicle or may drive vehicle rashly causing accident. Vehicle is under the similar risk when handled over a third party such as service engineer, friend etc.

The patent application US 2009/064740 A1 describes a valet key storage device to store a valet key in the storage portion of the device. A separate valet key is needed to operate the vehicle in valet mode. Two keys are required for operating the vehicle in normal mode and a valet mode. A Regular key is used to operate in normal mode and a valet key is used to operate the vehicle in valet mode. A valet key is specially stored in the device.

The prior art document US 7956730 discloses a system for controlling the vehicle given to a third party. The prior art discloses use of biometric authentication sensors. Biometric sensors are often considered superior to other identification systems as they are generally more difficult to disable, tamper with, or bypass. However, biometric sensors are expensive, difficult to integrate with existing vehicles, or difficult to operate.

Therefore, there is a need for an alternate, economical yet robust method and an apparatus which restricts some of the vehicle functions when a vehicle is handed over to the third party.

Therefore, there is a need for an alternate, economical yet robust method and an apparatus which restricts some of the vehicle functions when a vehicle is handed over to the third party.

### Object of the Invention

The object of this invention is to overcome the disadvantages of the techniques already known in the state of the art. Another object of this invention is to provide an apparatus and method for operating a vehicle in a restricted mode particularly when the vehicle is given to a third party, for example during valet parking. Another object of the invention is to provide an apparatus which is more secured allowing only the right user of the vehicle to disable the restricted vehicle functions.

### Advantages of the invention

The invention as claimed in the independent claim and the dependent claims has the following advantages.

The main advantage of the invention is to provide a robust, dependable and economical method to create a restricted mode for a vehicle. This restricted mode could be used to safe-guard the vehicle particularly when handled over to a third party, for example during valet parking. According to the present invention, the desired restricted mode is enabled or disabled by operating a switch between a first operative position and a second operative position. The second operative position enables the restriction of the vehicle function and first operative position disables the enabled vehicle function restriction. The vehicle function that was restricted can be disabled only by a valid user along with a valid password and with a valid ignition key and hence preventing the third party from disabling the restricted functions.

### Brief Description of the accompanying drawings

An exemplifying embodiment of the invention is explained in principle below with reference to the drawings. The drawings are,
- Figure 1: illustrates a block diagram of the apparatus of the current invention; and
- Figure 2a and 2b: illustrate a flow diagram of an authentication process executed by the control unit;

### Detailed Description of the invention:

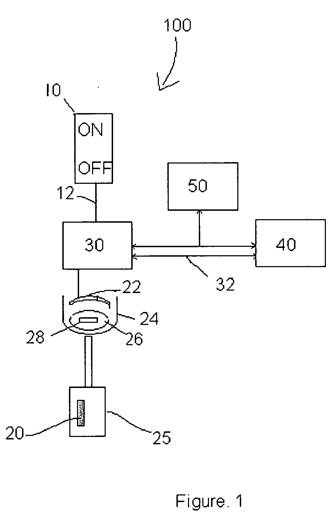

Figure 1 illustrates a block diagram of an apparatus 100 equipped in a vehicle (not shown). The apparatus 100 comprises a switch 10, a transponder 20 and a control unit (immobilizer control unit) 30 which communicates with each other via antenna 22 located inside a steering column 24, next to ignition lock switch 26 of the vehicle. The transponder 20 is incorporated in an ignition key 25, has an electronic access identifier stored in it. The apparatus 100 further comprises an authentication unit 40 and a keypad 50. The control unit 30 is an electronic controller unit. The control unit 30 mounted on the vehicle is provided with an immobilizing function to immobilize the vehicle. The control unit 30 communicates with the authentication unit 40 through a communication BUS such as CAN (control area network), LIN (Local Interconnect Network) or FlexRay to complete an authentication process. The authentication unit 40 is also an electronic control unit such as engine management system (EMS) ECU which is responsible for controlling the operation of the engine for example injection control, speed control etc.

The keypad 50 is associated with the control unit 30 or authentication unit 40 to input a password. The keypad 50 may be a conventional type of keyboard or a touch screen.

The vehicle is configured not to allow an engine to be started up without a valid ignition key 25. The ignition key 25 is a key embedded with a transponder 20. The control unit 30 is adapted to communicate with the transponder 20. Whenever the ignition key 25 is inserted into a key cylinder to operate the engine, the control unit 30 communicates with the transponder 20 to validate the authentication process. The transponder 20 transmits an access signal as a response to a query signal and control unit 30 that transmits the query signal and receives the access signal, which the transponder 20 transmits in response to the query signal. The transponder 20 has a predetermined authentication logic.

The switch 10 can be a toggle switch or a simple mechanical switch which can have two operative positions. The switch 10 is mounted on a dashboard of the vehicle or can also be mounted on a keypad 50. The switch 10 is adapted to switch between a first operative position and a second operative position. The switch 10 is used for turning on the restricted mode which is used while handing over the vehicle to a third party for example a valet attendant. The restricted mode is set up by the control unit (30) and authentication unit (40) for controlling the vehicle so that, for example, only some of the vehicle functions can be operated by the third party and other vehicle functions are restricted. Some of the vehicle functions that can be restricted to the third party are speed limit not greater than a predetermined limit, use of radio, limiting fuel for a limited distance and etc. Restrictions of the vehicle functions are not limited to these but it can be predefined in a database. The control unit 30 is adapted to receive the operation of the switch 10 via a control signal 12. The switch 10 generates a first signal indicating a restricted mode and a second signal indicating a normal mode. The vehicle is configured to operate in the restricted mode or the normal mode when the switch is operated in one of the position.

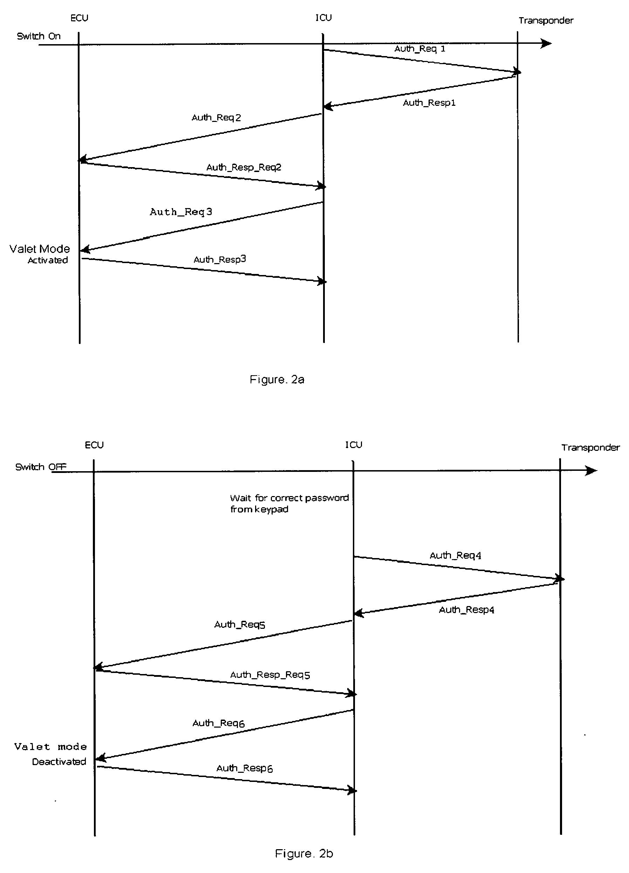

When the switch 10 is operated in one of the position, the control unit 30 executes one of the two authentication process - a first authentication process or a second authentication process. The authentication process is a closed loop communication between control unit 30, transponder 20 and the authentication unit 40. Figure. 2a and 2b shows a flow diagram of the authentication process. Figure. 2a illustrates first authentication process and Figure. 2b illustrates second authentication process.

Figure. 2a illustrates first authentication process. When the switch 10 is in the first operative position (ON), the control unit 30, transponder 20, antenna 22 and authentication unit 40 are involved in the first authentication process to enable the restricted mode. This process is demonstrated in Figure 2a. In a first step, the control unit 30 sends a first authentication request signal Auth_Req1 to a transponder 20 in response to the first operative position (ON) of the switch 10. Once the transponder 20 validates the first authentication request Auth_Req1 the transponder 20 sends a first authentication response Auth_Resp1 as permission to the control unit 30 to initiate the activation of the restricted mode. Then the control unit 30 sends a second authentication request signal Auth_Req2 to the authentication unit 40 to request enabling of restricted mode. Authentication unit 40 initiates the mutual authentication as per the predetermined authentication process by sending Auth_Resp_Req2. At the end of the mutual authentication, the authentication unit 40 sends a confirmation response Auth_Resp3 to the control unit 30 in response (Auth_Req3) to the request Auth_Resp_Req2 to confirm the enabling of the restricted mode and only few vehicle functions are available for third party. Thus the first authentication process executed by the control unit 30 and completes the process by authentication unit 40 for activating the restricted mode.

Figure. 2b illustrates second authentication process. When the switch 10 is in the second operative position (OFF), the control unit 30, transponder 20, antenna 22 and authentication unit 40 are involved in the second authentication process to disable the restricted mode. This process is demonstrated in Figure 2b. In a first step, control unit 30 requests for a password from the driver/user of the vehicle. Once the valid password is entered through the keypad 50, the control unit 30 validates the password and then triggers the second authentication process with the transponder 20 first and later with the authentication unit 40. If the user enters the wrong password or no password, the control unit 30 does not start the second authentication process. The control unit 30 waits for a predetermined time to accept the valid password. If the user does not enter the valid password even after the predetermined wait time, the control unit 30 does not allow the user to switch to normal mode for a second predetermined time and hence the vehicle configuration remains in the restricted mode. When the user is verified with the valid password the control unit 30 sends a fourth authentication request signal Auth_Req4 to a transponder 20. When the transponder 20 validates the fourth authentication request Auth_Req4 transponder 20 sends a fourth authentication response Auth_Resp4 as a permission to the control unit 30 to disable the restricted mode and switch to normal mode. Then the control unit 30 sends a fifth authentication request signal Auth_Req5 to the authentication unit 40 to request disabling of restricted mode of the vehicle after permission from the transponder 20. Authentication unit 40 initiates the mutual authentication as per the predetermined authentication process by sending Auth_Resp_Req5. At the end of the mutual authentication, the authentication unit 40 sends a confirmation response Auth_Resp6 to the control unit 30 to indicate the disabling of the restricted mode in response (Auth_Re6) to the request Auth_Resp_Req5 and switch to normal mode. Thus the second authentication process executed by the control unit 30 and completes the process by authentication unit 40 for activating the normal mode. Thus the vehicle is ready with the normal mode and all the vehicle functions are available for the valid user of the vehicle.

Thus the desired restriction of the vehicle function is enabled or disabled by operating a switch between a first operative position and a second operative position. The first operative position (ON) enables the restriction of the vehicle function and second operative position (OFF) disables the previously enabled vehicle function restrictions. The vehicle function that was restricted can be disabled only by a valid user along with a valid password and with a valid ignition key. If the valid ignition key is not available, even if the password is valid, the vehicle cannot be configured back to the normal mode. Hence it is more secured and the third party cannot disable the restricted functions. In addition, the apparatus would increase the efficiency and method of managing the vehicle.

It must be understood that the embodiments explained in the above detailed description in only illustrative and does not limit the scope of this invention. The scope of this invention is limited only by the scope of the claims. Many modification and changes in the embodiments aforementioned are envisaged and are within the scope of this invention. For example the keypad can also be associated with authentication unit. The authentication unit can be a simple controller not related to the EMS ECU and thus controlling the other functions outside the scope of the EMS ECU.

## Claims

1. An in-vehicle apparatus (100) for restricting at least one vehicle function, said apparatus (100) comprising:
- a switch (10) adapted to switch between a first operative position (ON) and a second operative position (OFF);
- a control unit (30) for receiving said operation of said switch (10); wherein said switch (10) generates a first signal when the switch (10) is in first operative position (ON) to enable restriction of at least one vehicle function; wherein said switch (10) generates a second signal when the switch is in second operative position (OFF) to disable said restriction of at least one vehicle function;
- said control unit (30) being adapted to communicate with a transponder (20) and an authentication unit (40) to execute an authentication process to restrict at least one vehicle function in dependence of operation of said switch (10) in said first operative position (ON),
**characterized in that**
- said control unit (30) is associated with a keypad (50) to input a password, and
- said control unit (30) is adapted to execute a second authentication process based on said second signal to disable restriction of said vehicle function, wherein a password is received before the execution of said second authentication process to validate the disabling of the restriction of vehicle function.

2. The in-vehicle apparatus (100) according to the claim 1, wherein said transponder (20) is incorporated in an ignition key (25) and said transponder (20) has a predetermined authentication logic.

3. A method for operating an in-vehicle apparatus (100) according to the claim 1 or 2, said method comprising the steps:
- receiving a first signal or second signal to enable or disable restriction of at least one vehicle function;
- executing a first authentication process based on said first signal to enable restriction of said vehicle function; and
- executing a second authentication process based on said second signal to disable restriction of said vehicle function, wherein a password is received before the execution of said second authentication process to validate the disabling of the restriction of vehicle function.

4. The method according to the claim 3, wherein during said first authentication process, said control unit (30) sends a first authentication request signal to a transponder (20) in dependence of said received first signal.

5. The method according to the claim 3 or 4, wherein during said first authentication process, said control unit (30) sends a second and third authentication request signal to said authentication unit (40) in dependence of said received first signal of said switch (10) to enable restriction of at least one vehicle function after a permission from said transponder.

6. The method according to one of claims 3-5, wherein said control unit 30 request for a password before the execution of the second authentication process to re-enable the said restricted vehicle function in dependence of second signal.

7. The method according to one of claims 3-6, wherein during said second authentication process, said control unit (30) sends a fourth authentication request signal to a transponder (20) in dependence of said received second signal.

8. The method according to one of claims 3-7, wherein during said second authentication process, said control unit (30) sends a fifth and sixth authentication request signal to said authentication unit (40) to switch to normal mode by re-enabling the restricted vehicle functions.

## Patentansprüche

1. Fahrzeuginterne Vorrichtung (100) zur Einschränkung wenigstens einer Fahrzeugfunktion, wobei die Vorrichtung (100) umfasst:
- einen Schalter (10), der dafür ausgelegt ist, zwischen einer ersten Betriebsposition (ON/EIN) und einer zweiten Betriebsposition (OFF/AUS) umzuschalten;
- eine Steuerung (30) zum Aufnehmen des Betriebs des Schalters (10);
wobei der Schalter (10) ein erstes Signal erzeugt, wenn der Schalter (10) in der ersten Betriebsposition (ON/EIN) steht, um die Einschränkung wenigstens einer Fahrzeugfunktion zu aktivieren;
wobei der Schalter (10) ein zweites Signal erzeugt, wenn der Schalter in der zweiten Betriebsposition (OFF/AUS) steht, um die Einschränkung wenigstens einer Fahrzeugfunktion zu deaktivieren;
- wobei die Steuerung (30) dafür ausgelegt ist, mit einem Transponder (20) und einer Authentifizierungseinheit (40) zu kommunizieren, um einen Authentifizierungsprozess auszuführen, um wenigstens eine Fahrzeugfunktion einzuschränken, abhängig vom Betrieb des Schalters (10) in der ersten Betriebsposition (ON/EIN),
**dadurch gekennzeichnet, dass**
- die Steuerung (30) mit einer Tastatur (50) zur Eingabe eines Kennworts verbunden ist und
- die Steuerung (30) dafür ausgelegt ist, einen zweiten Authentifizierungsprozess basierend auf dem zweiten Signal auszuführen, um die Einschränkung der Fahrzeugfunktion zu deaktivieren, wobei vor der Ausführung des zweiten Authentifizierungsprozesses ein Kennwort empfangen wird, um die Deaktivierung der Einschränkung der Fahrzeugfunktion zu validieren.

2. Fahrzeuginterne Vorrichtung (100) gemäß Anspruch 1, wobei der Transponder (20) in einen Zündschlüssel (25) integriert ist und der Transponder (20) eine vorbestimmte Authentifizierungslogik besitzt.

3. Verfahren zum Betrieb einer fahrzeuginternen Vorrichtung (100) gemäß Anspruch 1 oder 2, wobei das Verfahren die Schritte umfasst:
- Empfangen eines ersten Signals oder eines zweiten Signals, um eine Einschränkung wenigstens einer Fahrzeugfunktion zu aktivieren bzw. zu deaktivieren;
- Ausführen eines ersten Authentifizierungsprozesses basierend auf dem ersten Signal, um die Einschränkung der Fahrzeugfunktion zu aktivieren; und
- Ausführen eines zweiten Authentifizierungsprozesses basierend auf dem zweiten Signal, um die Einschränkung der Fahrzeugfunktion zu deaktivieren, wobei vor der Ausführung des zweiten Authentifizierungsprozesses ein Kennwort empfangen wird, um die Deaktivierung der Einschränkung der Fahrzeugfunktion zu validieren.

4. Verfahren gemäß Anspruch 3, wobei während des ersten Authentifizierungsprozesses die Steuerung (30) ein erstes Authentifizierungsanforderungssignal an einen Transponder (20) sendet, abhängig von dem empfangenen ersten Signal.

5. Verfahren gemäß Anspruch 3 oder 4, wobei während des ersten Authentifizierungsprozesses die Steuerung (30) ein zweites und ein drittes Authentifizierungsanforderungssignal an die Authentifizierungseinheit (40) sendet, abhängig von dem empfangenen ersten Signal von dem Schalter (10), um nach Erlaubnis vom Transponder die Einschränkung wenigstens einer Fahrzeugfunktion zu aktivieren.

6. Verfahren gemäß einem der Ansprüche 3-5, wobei die Steuerung (30) vor der Ausführung des zweiten Authentifizierungsprozesses ein Kennwort anfordert, um die eingeschränkte Fahrzeugfunktion abhängig von dem zweiten Signal wieder zu aktivieren.

7. Verfahren gemäß einem der Ansprüche 3-6, wobei während des zweiten Authentifizierungsprozesses die Steuerung (30) ein viertes Authentifizierungsanforderungssignal an einen Transponder (20) sendet, anhängig von dem empfangenen zweiten Signal.

8. Verfahren gemäß einem der Ansprüche 3-7, wobei während des zweiten Authentifizierungsprozesses die Steuerung (30) ein fünftes und ein sechstes Authentifizierungsanforderungssignal an die Authentifizierungseinheit (40) sendet, um durch Wiederaktivierung der eingeschränkten Fahrzeugfunktionen in die Normalbetriebsart umzuschalten.

## Revendications

1. Appareil (100) embarqué dans un véhicule, servant à limiter au moins une fonction du véhicule, ledit appareil (100) comprenant :
- un commutateur (10) adapté à commuter entre une première position fonctionnelle (ON) et une deuxième position fonctionnelle (OFF) ;
- une unité de commande (30) servant à recevoir ledit actionnement dudit commutateur (10) ;
lequel commutateur (10) génère un premier signal lorsque le commutateur (10) occupe la première position fonctionnelle (ON) pour activer la limitation d'au moins une fonction du véhicule ;
lequel commutateur (10) génère un deuxième signal lorsque le commutateur occupe la deuxième position fonctionnelle (OFF) pour désactiver ladite limitation d'au moins une fonction du véhicule ;
- ladite unité de commande (30) étant adaptée à communiquer avec un transpondeur (20) et une unité d'authentification (40) pour exécuter un processus d'authentification en vue de limiter au moins une fonction du véhicule en fonction de l'actionnement dudit commutateur (10) dans ladite première position fonctionnelle (ON),
**caractérisé en ce que**
- ladite unité de commande (30) est associée à un pavé de touches (50) pour saisir un mot de passe, et
- ladite unité de commande (30) est adaptée à exécuter un deuxième processus d'authentification sur la base dudit deuxième signal en vue de désactiver la limitation de ladite fonction du véhicule, un mot de passe étant reçu préalablement à l'exécution dudit deuxième processus d'authentification en vue de valider la désactivation de la limitation de la fonction du véhicule.

2. Appareil (100) embarqué dans un véhicule selon la revendication 1, dans lequel ledit transpondeur (20) est incorporé dans une clé de contact (25) et ledit transpondeur (20) est doté d'une logique d'authentification préétablie.

3. Procédé pour faire fonctionner un appareil (100) embarqué dans un véhicule selon la revendication 1 ou 2, ledit procédé comprenant les étapes suivantes :
- réception d'un premier signal ou d'un deuxième signal en vue d'activer ou de désactiver la limitation d'au moins une fonction du véhicule ;
- exécution d'un premier processus d'authentification sur la base dudit premier signal en vue d'activer la limitation de ladite fonction du véhicule ; et
- exécution d'un deuxième processus d'authentification sur la base dudit deuxième signal en vue de désactiver la limitation de ladite fonction du véhicule, un mot de passe étant reçu préalablement à l'exécution dudit deuxième processus d'authentification en vue de valider la désactivation de la limitation de la fonction du véhicule.

4. Procédé selon la revendication 3, dans lequel, durant ledit premier processus d'authentification, ladite unité de commande (30) envoie un premier signal de demande d'authentification à un transpondeur (20) en fonction dudit premier signal reçu.

5. Procédé selon la revendication 3 ou 4, dans lequel, durant ledit premier processus d'authentification, ladite unité de commande (30) envoie un deuxième et un troisième signal de demande d'authentification à ladite unité d'authentification (40) en fonction dudit premier signal reçu dudit commutateur (10) en vue d'activer la limitation d'au moins une fonction du véhicule suite à une permission émanant dudit transpondeur.

6. Procédé selon l'une des revendications 3 à 5, dans lequel ladite unité de commande (30) demande un mot de passe préalablement à l'exécution du deuxième processus d'authentification en vue de réactiver ladite fonction limitée du véhicule en fonction du deuxième signal.

7. Procédé selon l'une des revendications 3 à 6, dans lequel, durant ledit deuxième processus d'authentification, ladite unité de commande (30) envoie un quatrième signal de demande d'authentification à un transpondeur (20) en fonction dudit deuxième signal reçu.

8. Procédé selon l'une des revendications 3 à 7, dans lequel, durant ledit deuxième processus d'authentification, ladite unité de commande (30) envoie un cinquième et un sixième de demande d'authentification à ladite unité d'authentification (40) en vue de commuter sur un mode normal en réactivant les fonctions limitées du véhicule.
